# EUROPÄISCHE PATENTSCHRIFT

(11) **EP 0 350 017 B1**
(45) Veröffentlichungstag und Bekanntmachung des Hinweises auf die Patenterteilung: **09.03.1994**
(21) Anmeldenummer: 89112297.0
(22) Anmeldetag: 05.07.1989
(51) Int. Cl.: F16K 5/06, F16K 37/00

(54) **Absperrorgan mit Leckageanzeige**
Valve with a leak indicator
Obturateur avec indicateur de fuite

(30) Priorität: 05.07.1988 DE 8808574 U; 09.08.1988 DE 8810104 U
(43) Veröffentlichungstag der Anmeldung: 10.01.1990
(73) Patentinhaber: APV ROSISTA GMBH, 59425 Unna (DE)
(72) Erfinder: Bräckelmann, Wolfgang, D-4750 Unna-Uelzen (DE)
(74) Vertreter: Henfling, Fritz, Dipl.-Ing.

(56) Entgegenhaltungen:
- WO-A-87/00597
- DE-A- 2 803 818
- FR-A- 703 758
- FR-A- 2 091 174
- GB-A- 1 173 090
- Catalog of U S Valves, Jan. 84, Washington D.C.; USA, The Valve Manufactures Association, page 138;
- "Lueger", Lexikon der Technik, Band 6, Seite 208f.,R. von Miller, Deutsche Verlags-Anstalt Stuttgart,1965

## Beschreibung

Die Erfindung betrifft ein zwischen zwei Leitungen einfügbares Absperrorgan mit Leckageanzeige, der im Oberbegriff des Patentanspruchs 1 umrissenen Gattung. Ein solches Absperrorgan ist in der GB-A-1 173 090 beschrieben.

Entsprechende Absperrorgane kommen beispielsweise in Fällen zum Einsatz, in denen eine Trennung von Produktflüssigkeit und Reinigungslösung vorgesehen werden muß. Verwendet werden hierfür bislang besondere Ausgestaltungen von Klappenventilen und von Tellerventilen. In beiden Fällen müssen Maßnahmen für den Verschluß des Leckageaustritts bei geöffnetem Ventil getroffen werden. Bei dem als Absperrorgan dienenden Kugelhahn nach der GB-A-1 173 090 besteht die die Funktion des Absperrorgans beeinträchtigende Möglichkeit der Verlagerung des Schließkörpers in Strömungsrichtung durch das hinter ihm anstehende Medium, außerdem kann es hierbei zu einem Druckaufbau im Totraum kommen, der zu vermeiden ist.

Ausgehend vom im vorausgehenden umrissenen Stand der Technik liegt der Erfindung das Bedürfnis nach einem eine aufwendige Sonderkonstruktion vermeidenden einwandfrei arbeitenden Absperrorgan mit Leckageanzeige zugrunde.

Dem Bedürfnis wird erfindungsgemäß durch eine Ausgestaltung gattungsgemäßer Absperrorgane dergestalt Rechnung getragen, daß
der Schließkörper in der Flucht der Betätigungsspindel beidseitig im Hahngehäuse gelagert ist und
die Ringdichtungen in ihrer radialen Richtung lagefixiert in den jeweiligen Anschlußstutzen des Hahngehäuses eingefügt sind und an an das Gehäuse angesetzten Anschlußflanschen anliegen.

Da es bei diesem Absperrorgan in keiner Schaltstellung des Schließkörpers zu einer durchgängigen Verbindung zwischen dem Leitungssystem und der Leckageleitung kommt, erübrigen sich Maßnahmen für den Verschluß des Leckageaustritts bei geöffnetem Absperrorgan. Darüber hinaus macht die erfindungsgemäße Lösung sich in vorteilhafter Weise die dem Kugelhahn eigenen Vorteile zunutze, insbesondere seine Druckschlagsicherheit und die Erhaltung des vollen Leitungsquerschnitts im Absperrorgan. Da das Ventil stetig öffnet und schließt unterbleiben dann auch Druckschläge bei der Schaltung.

Die Leckageableitung kann unmittelbar durch die Wandung des Gehäuses erfolgen, bei einem beidseitig im Gehäuse gelagerten Schließkörper bietet sich für die Leckageableitung die Ausbildung des auf der von der Betätigungsspindel abgekehrten Seite vom Schließkörper ausgehenden Lagerzapfens als die Gehäusewandung durchdringende, zum Totraum zwischen dem Gehäuse, den Ringdichtungen und dem Schließkörper durchgängige Hohlwelle an.

In besonderen Einsatzfällen solcher Absperrorgane kann es erforderlich werden, den Leckagebereich, also den zwischen dem Gehäuse des Kugelhahns, den Ringdichtungen und dem Schließkörper ausgebildeten Totraum und die Leckageleitung, individuell zu reinigen, gegebenenfalls dann auch zu desinfizieren. Dementsprechend ist in Ausgestaltung der Erfindung eine Spülmittelzuleitung zum Totraum des Kugelhahns vorgesehen, durch die das Spülmittel, Dampf und gegebenenfalls dann auch Desinfektionslösungen in den Totraum eingeleitet werden, deren Ableitung über die Leckageleitung erfolgt. Die Reinigungsbehandlung läßt sich hierbei in vorteilhafter Weise in jeder Schaltstellung des Kugelhahns durchführen. Die einfachste Lösung bildet eine den Totraum des Kugelhahns unmittelbar beaufschlagende Spülmittelzuleitung. Aus einer im Abstand von der Leckageleitung oberhalb der Leckageleitung tangential in den Totraum mündenden Spülmittelzuleitung resultiert in vorteilhafter Weise eine den Totraum durchsetzende Umlaufspülung mit verbessertem Reinigungseffekt. Auch die im tiefstliegenden Bereich des Totraums angesetzte Leckageleitung kann einen tangentialen Verlauf zum Kugelhahngehäuse nehmen.

Bei einer speziellen Ausführungsform ist auch die Spindel des Kugelhahns, mit der der Schließkörper betätigt wird, als am freien Ende verschlossene Hohlwelle mit Durchgängen zum Totraum des Kugelhahns versehen, wobei an die Spindel im Überstand über den Kugelhahn eine Spülmittelzuleitung angeschlossen ist, etwa dergestalt, daß die Spülmittelzuleitung in einen von der Spindel flüssigkeitsdicht durchdrungenen Ringkanal ausläuft und die im Bereich des Ringkanals liegende Spindelwandung mit Durchgängen versehen ist. Um einen Flüssigkeitsstau im Totraum zu vermeiden kann hierbei vorgesehen sein, daß der freie Querschnitt der Durchgänge der Spindel zum Totraum des Kugelhahns kleiner ausgelegt ist als der der Durchgänge vom Totraum zum Lagerzapfen mit sich durch ihn erstreckender Leckageleitung.

In weiterer Ausgestaltung der Erfindung kann vorgesehen sein, daß die aus einem formbeständigen Kunststoff bestehenden, in den Anschlußstutzen des Hahngehäuses eingelagerten in axialer Richtung verlagerbaren Ringdichtungen für den Schließkörper eine Länge aufweisen, die einen axialen Spalt zwischen ihnen und den an den Anschlußstutzen ansetzbaren Anschlußflanschen belassen, den ein sich zwischen der flanschseitigen Stirnseite der Dichtungen und den Anschlußflanschen erstreckendes Federelement überbrückt, wobei die Ringdichtungen sowie der ihnen jeweils zugeordnete Anschlußstutzen im Bereich zwischen Schließkörper und Anschlußflansch einen Ringraum begrenzen, in den eine Druckmittelzuleitung mündet. Werden hierbei die zwischen den Anschlußstutzen und den Ringdichtungen ausgebildeten Ringräume mit Druck beaufschlagt, kommt es zum Abheben der Ringdichtungen vom Schließkörper und einer Reinigung insbesondere der Dichtflächen der Ringdichtungen wie auch der damit korrespondierenden Bereiche des Schließkörpers durch in der Hauptleitung anstehendes Reinigungsmittel, das durch die sich zwischen den Ringdichtungen und dem Schließkörper ausbildenden Spalten in den Totraum des Kugelhahns strömt. Unter Umständen kann hierbei dann auch auf eine eigenständige Spülmittelzuleitung zum Totraum verzichtet werden. Wenn das die Umstände erfordern, kann auf diese Weise zunächst der eine Dichtungsbereich gereinigt werden und anschließend der andere Dichtungsbereich.

Bei dem der Schließkörperdichtung ihre Funktionsstellung vermittelnden Federelement kann es sich um eine über die Ringdichtung vorspringende, gegen den Anschlußflansch zur Anlage kommende Weichdichtung handeln. Zu beiden Seiten des in der aus einem geeigneten formbeständigen Kunststoff bestehenden Ringdichtung ausgebildeten Ringraums in die Ringdichtung eingelassene Weichdichtungen bewirken die erforderliche Abdichtung des Ringraums.

Die Leckageleitung und gegebenenfalls dann auch die Spülmittelleitung können selbstverständlich auch mit einem Absperrorgan versehen sein, sei es, daß ein Verweilen des Spülmittels in den zu reinigenden Bereichen des Kugelhahns erwünscht ist, sei es, um die gereinigten Bereiche gegen Fremdeinflüsse abzuschirmen.

In der Zeichnung ist die Erfindung an Hand von Ausführungsbeispielen weitergehend erläutert. Es zeigen:
- Fig. 1: eine erste Ausführungsform des neuen Absperrorgans in Offenstellung,
- Fig. 2: das Absperrorgan in Fig. 1, den Schließkörper in Schließstellung,
- Fig. 3: eine der Fig. 2 entsprechende Darstellung einer abgewandelten Ausführungsform des Absperrorgans nach den Figuren 1 und 2, abgebrochen,
- Fig. 4: eine zweite Ausführungsform des neuen Absperrorgans in Offenstellung,
- Fig. 5: das Absperrorgan in Fig. 4, den Schließkörper in Schließstellung,
- Fig. 6: eine der Fig. 5 entsprechende Darstellung einer abgewandelten Ausführungsform des Absperrorgans nach den Figuren 4 und 5, abgebrochen,
- Fig. 7: eine weitere Ausführungsform des neuen Absperrorgans in Schließstellung.

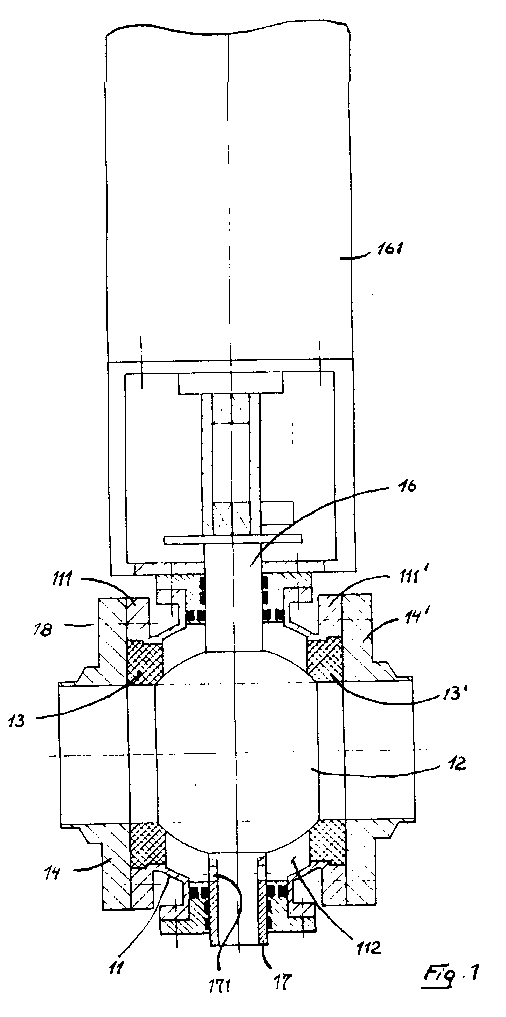

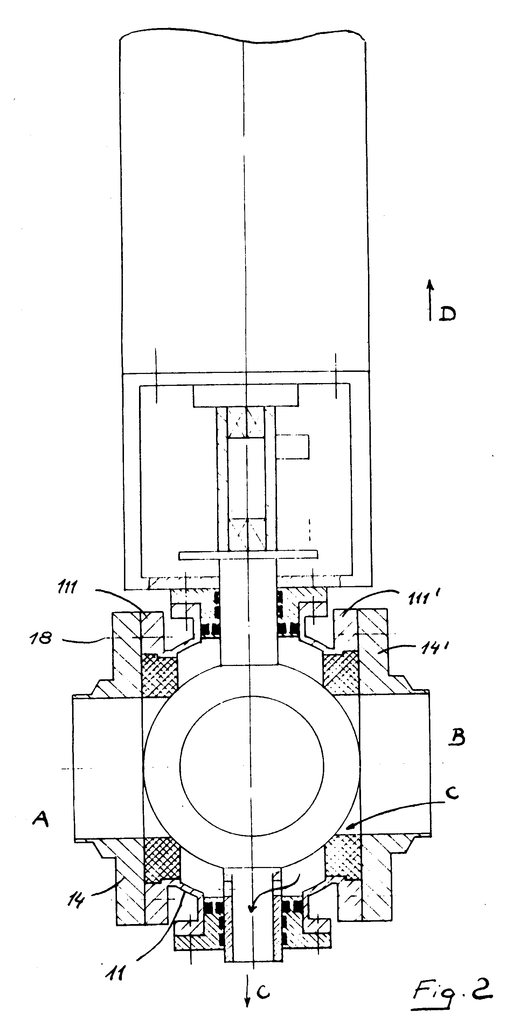

Der das Absperrorgan bildende Kugelhahn in den Figuren 1 und 2 setzt sich in an sich bekannter Weise aus dem Gehäuse 11 mit den Anschlußstutzen 111, 111′, dem Schließkörper 12, den Ringdichtungen 13, 13′, den Anschlußflanschen 14, 14′ und der Spindel 16 zusammen. Der Schließkörper 12 ist auf der von der Spindel 16 abgekehrten Seite mit einem sich durch das Gehäuse 11 nach außen erstreckenden hohlen Lagerzapfen 17 versehen, der in seinem im Gehäuse 11 befindlichen Bereich mit Durchgängen 171 zum Totraum 112 zwischen dem Gehäuse 11, den Ringdichtungen 13, 13′ und dem Schließkörper 12 versehen ist. Der Durchgang für den Lagerzapfen 17 im Gehäuse 11 ist dem Spindeldurchgang entsprechend ausgebildet und abgedichtet. Im dargestellten Fall greift an der Spindel ein Spindelantrieb 161 an. Das schließt eine Betätigung des Ventils von Hand nicht aus.

Bei in Schließstellung (Fig. 2) befindlichem undichten Ventil fließt aus dem Bereich A oder aus dem Bereich B in den Totraum 112 gelangende Leckageflüssigkeit durch die Durchgänge 171 in den hohlen Lagerzapfen 17 und durch den hohlen Lagerzapfen 17 die Leckage anzeigend ins Freie (Pfeilfolge C-C).

Wird es erforderlich, etwa die Ringdichtungen 13, 13′ auszuwechseln, genügt das Lösen der Flanschverbindungen 18, so daß das Gehäuse 11 etwa im Sinne des Pfeiles D in Fig. 2 ausgebaut werden kann.

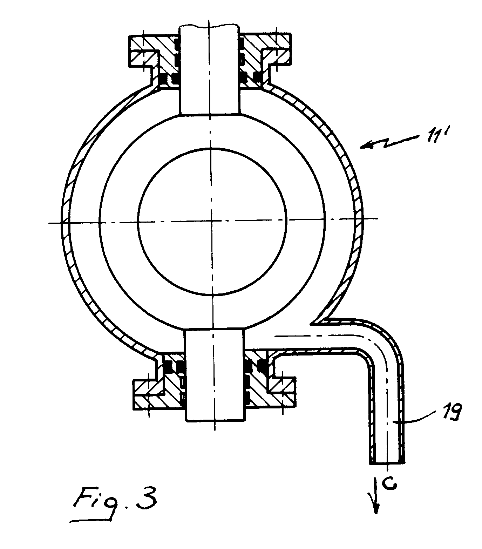

Wie aus Fig. 3 ersichtlich ist, kann die Leckageableitung auch an anderer Stelle des Gehäuses 11′ unmittelbar nach außen erfolgen. Dabei wird man die Leckageleitung 19 natürlich von der tiefstmöglichen Stelle am Gehäuse 11′ ausgehen lassen.

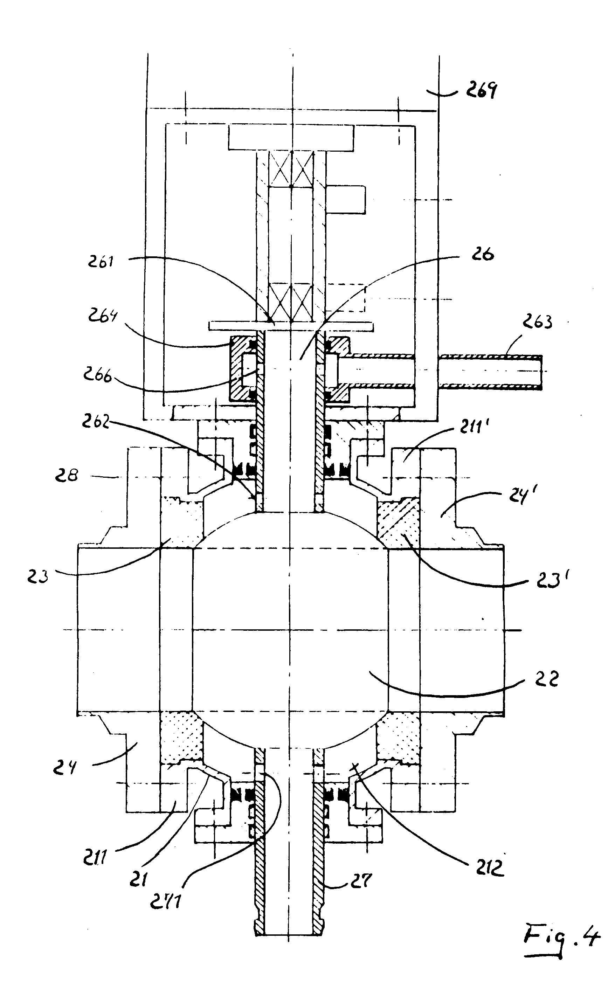

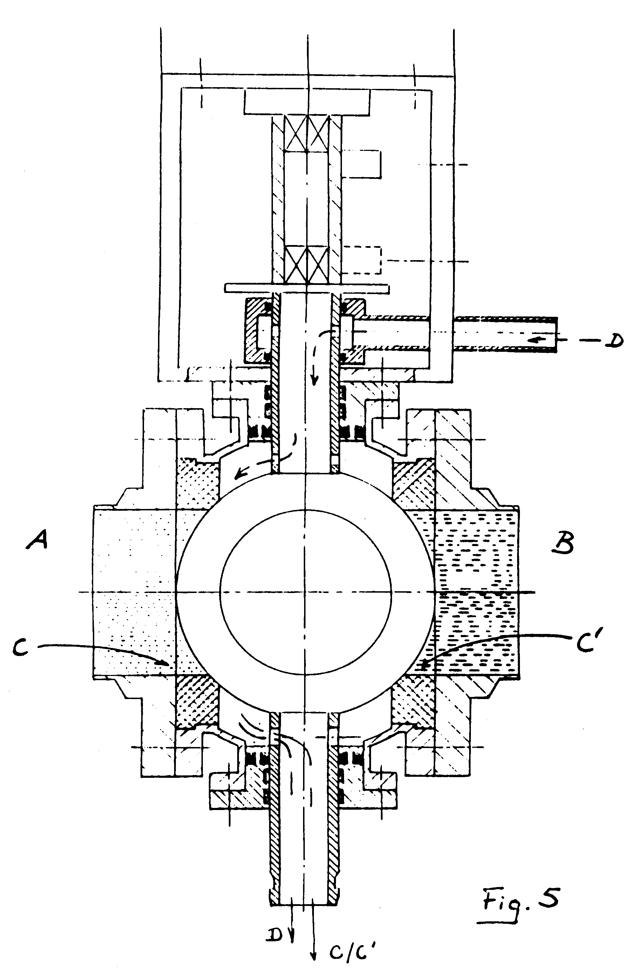

Das Absperrorgan nach den Figuren 4 und 5 wird ebenfalls von einem Kugelhahn gebildet, der sich auch wieder aus einem Gehäuse 21 mit Anschlußstutzen 211, 211′, den Ringdichtungen 23, 23′, dem Schließkörper 22, den Anschlußflanschen 24, 24′ der Spindel 26 und dem sich gegenläufig zum Spindel 26 durch das Gehäuse 21 nach außen erstreckenden hohlen Lagerzapfen 27 zusammensetzt. Durch den im Gehäuseinnern über Durchgänge 271 mit dem Totraum 212 zwischen dem Gehäuse 21, den Ringdichtungen 23, 23′ verbundenen, vom Schließkörper 22 ausgehenden hohlen Lagerzapfen 27 austretende Leckageflüssigkeit (Pfeilfolge C-C bzw. C′-C′ in Fig. 5) zeigt das Undichtwerden des Kugelhahns an.

Die ebenfalls hohl ausgebildete Spindel 26, die im Gehäuseinnern auch wieder über Durchgänge 262 mit dem Totraum 212 zwischen Gehäuse 21, den Ringdichtungen 23, 23′ sowie dem Schließkörper 22 verbunden ist und an deren Überstand über das Gehäuse 21 über einen diesen Überstand umgebenden Ringkanal 264 eine Zuleitung 263 liegt, eröffnet die Möglichkeit, den Totraum 212 zwischen dem Gehäuse 21, den Ringdichtungen 23 23′ und dem Schließkörper 22 mittels über die Zuleitung 263, den Ringkanal 264, Durchgänge 266 in der Spindelwandung, die hohle Spindel 26 und die in den Totraum 212 mündenden Durchgänge 262 in der Spindelwandung mit Reinigungsflüssigkeit bzw. Desinfektionslösung zu beaufschlagen, die dann auch wieder durch den hohlen Lagerzapfen 27 austritt (Pfeilfolge D-D in Fig. 5)
Mit 261 ist der Abschluß der hohlen Spindel 26 an ihrem freien, in den Spindelantrieb 269 übergehenden Ende bezeichnet. A und B bezeichnen unterschiedliche in den an den Kugelhahn angeschlossenen Leitungen anstehende Produkte.

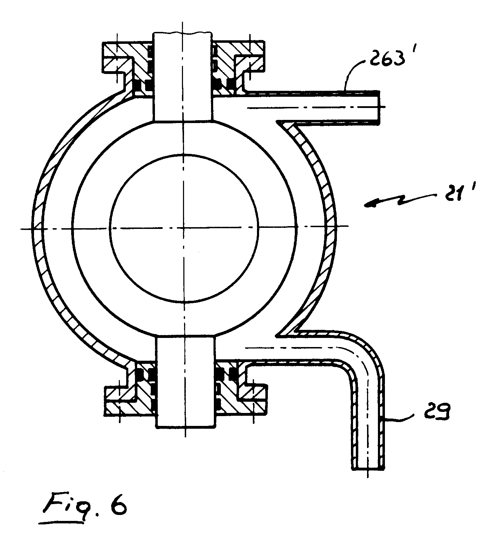

Bei der die Totraumreinigung ermöglichenden Ausgestaltung des neuen Absperrorgans ist, wie das in Fig. 6 angedeutet ist, auch eine Lösung möglich, bei der die Leckageableitung (29) unmittelbar durch die Gehäusewandung (21′) nach außen erfolgt. Gleichermaßen kann dann auch das Spülmittel unmittelbar durch die Gehäusewandung (21′) des Kugelhahns in den zwischen dem Gehäuse 21, den Ringdichtungen 23, 23′ und dem Schließkörper 22 ausgebildeten Totraum 212 eingeleitet werden (263′), wobei sich eine tangentiale Einleitung des Spülmittels in das Gehäuse als vorteilhaft erweist.

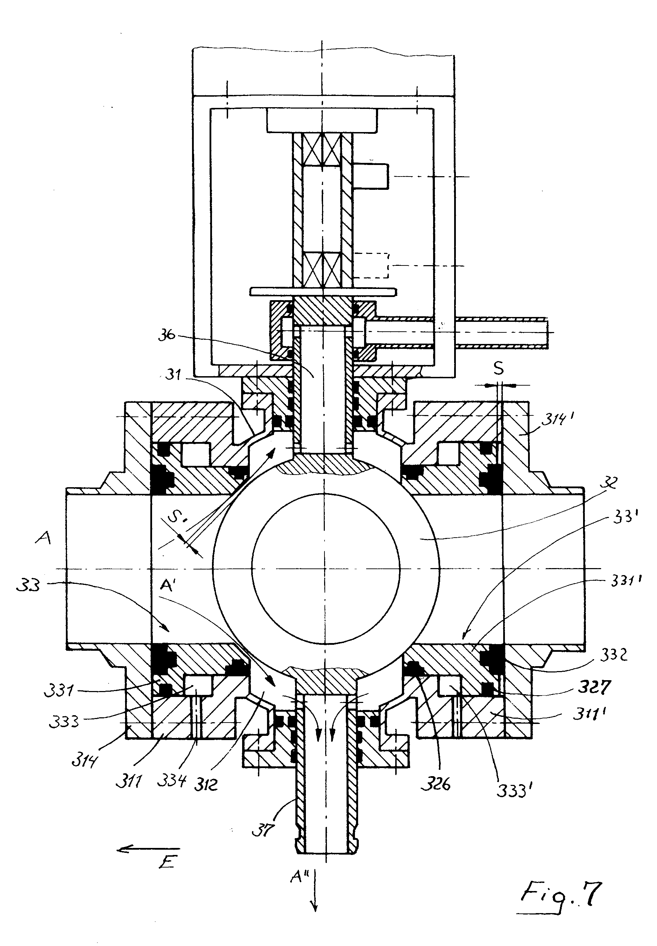

Die Ausgestaltung des neuen Absperrorgans nach Fig. 7 eröffnet die Möglichkeit der Reinigung auch des Ventilssitzes sowohl dichtungsseitig als auch schließkörperseitig. Hierfür sind die Ringdichtungen 331, 331′ in besonderer Weise ausgebildet. Die eigentlichen, in die Anschlußstutzen 311, 311′ des Kugelhahngehäuses 31 eingelagerten Ringdichtungen 331, 331' sind formbeständige Kunststoffhülsen einer Länge, die in Funktionsstellung der Ringdichtungen einen Spalt S zwischen ihnen und den sie hinterfangenden Anschlußflanschen 314, 314′ belassen, der durch eine in sie eingelassene Weichdichtung 332 überbrückt wird. Des weiteren ist zwischen den Ringdichtungen 331, 331′ und den Anschlußstutzen 311, 311′ ein schließkörperseitig vom Anschlußstutzen und an der abgekehrten Seite von der Ringdichtung begrenzter, abgedichteter (326, 327) Ringraum 333, 333' ausgebildet, in den eine Druckmittelleitung 334 mündet. Werden die Ringräume 333, 333' der Ringdichtung 331 bzw. der Ringdichtung 331' mit Druck beaufschlagt, kommt es zu einer Verlagerung der Ringdichtungen, z.B. 331, im Anschlußstutzen 311 im Sinne des Pfeiles E, wie das in Fig. 7 links angedeutet ist. Mit dieser Verlagerung geht eine dem Ursprungsabstand S der Ringdichtung 331 vom Anschlußflansch 314 bzw. 314' entsprechende Ausbildung eines Spaltes S' zwischen der Ringdichtung 331 und dem Schließkörper 32 einher, durch den in der Hauptleitung anstehendes Reinigungsmittel A in den zwischen dem Gehäuse 31, den Ringdichtungen 331, 331' und dem Schließkörper 32 ausgebildeten Totraum 312 unter Reinigung der Dichtflächen und einerseits des Schließkörpers 32 und andererseits der Ringdichtung 331 strömt, das den Totraum 312 durch die Leckageableitung, also den hohlen Lagerzapfen 37 wieder verläßt.

Diese Art und Weise der Reinigung kann zusätzlich zur Totraumreinigung mittels durch die hohle Spindel 36 in den Totraum 312 eingeleitetem Reinigungsmittel erfolgen. Wenn das die Bedingungen zulassen, kann aber auch auf eine gesonderte Reinigung mittels durch die Spindel 36 zugeführtem Reinigungsmittel verzichtet werden.

## Patentansprüche

1. Zwischen zwei Leitungen einfügbares Absperrorgan mit Leckageanzeige in Form eines als Kugelhahn ausgebildeten Ventils, dessen Schließkörper (12) mit in Fließrichtung des Mediums beidseitig an den Anschlußstutzen (111, 111') des Hahngehäuses (11) angeordneten Ringdichtungen (13, 13') abdichtwirksam ist, wobei zwischen dem Hahngehäuse (11), den Ringdichtungen (13, 13') und dem kugelförmigen Schließkörper (12) ein in den Endstellungen des Schließkörpers (12) gegenüber den in den Leitungen anstehenden Medien abgedichteter Totraum (112) ausgebildet ist, von dem eine aus dem Absperrorgan herausführende Leckageleitung (17) ausgeht, dadurch gekennzeichnet,
daß der Schließkörper (12) in der Flucht der Betätigungsspindel (16) beidseitig im Hahngehäuse (11) gelagert ist und
daß die Ringdichtungen (13, 13') in ihrer radialen Richtung lagefixiert in den jeweiligen Anschlußstutzen (111, 111') des Hahngehäuses (11) eingefügt sind und an an das Gehäuse (11) angesetzten Anschlußflanschen (14, 14') anliegen.

2. Doppelsitzventil nach Anspruch 1, gekennzeichnet durch eine durch die Wandung des Hahngehäuses (11') ins Freie führende Leckageleitung (19).

3. Doppelsitzventil nach Anspruch 1, dadurch gekennzeichnet, daß der auf der von der Betätigungsspindel (16) abgekehrten Seite vom Schließkörper (12) ausgehende Lagerzapfen (17) eine sich durch die Gehäusewandung hindurch erstreckende zum Totraum (112) des Kugelhahns hin durchgängige Hohlwelle ist.

4. Doppelsitzventil nach Anspruch 3, gekennzeichnet durch eine der Spindellagerung am Hahngehäuse (11) entsprechende flüssigkeitsdichte Lagerung der Hohlwelle am Hahngehäuse (11).

5. Doppelsitzventil nach einem der Ansprüche 1 bis 4, gekennzeichnet durch eine Spülmittelzuleitung zum Totraum (212) des Kugelhahns.

6. Doppelsitzventil nach Anspruch 5, gekennzeichnet durch eine durch die Wandung des Gehäuses (21') unmittelbar in den Totraum (212) mündende Spülmittelzuleitung (263').

7. Doppelsitzventil nach Anspruch 6, gekennzeichnet durch eine im höchstliegenden Bereich tangential in den Totraum (212) mündende Spülmittelzuleitung (263') und eine im tiefstliegenden Bereich von ihm abgehende Leckageleitung (29).

8. Doppelsitzventil nach Anspruch 5, dadurch gekennzeichnet, daß auch die Spindel (26) als am freien Ende verschlossene Hohlwelle mit Durchgängen (262) zum Totraum (212) des Kugelhahns ausgebildet ist und an die Spindel (26) im Überstand über den Kugelhahn eine Spülmittelzuleitung (263) angeschlossen ist.

9. Doppelsitzventil nach Anspruch 8, dadurch gekennzeichnet, daß die Spülmittelzuleitung (263) in einen von der Spindel (26) flüssigkeitsdicht durchdrungenen Ringkanal (264) ausläuft und die im Bereich des Ringkanals (264) liegende Spindelwandung mit Durchgängen (266) versehen ist.

10. Doppelsitzventil nach Anspruch 8 oder Anspruch 9, dadurch gekennzeichnet, daß der freie Querschnitt der Durchgänge (266) der Spindel (26) zum Totraum (212) des Kugelhahns kleiner ausgelegt ist als der der Durchgänge (271) vom Totraum (212) zur Hohlwelle.

11. Doppelsitzventil nach einem der Ansprüche 1 bis 10, dadurch gekennzeichnet, daß die aus einem formbeständigen Kunststoff bestehenden in den Anschlußstutzen (311, 311') des Hahngehäuses (31) eingelagerten in axialer Richtung verlagerbaren Ringdichtungen (331, 331') eine Länge aufweisen, die einen axialen Spalt (S) zwischen ihnen und den an den Anschlußstutzen (311, 311') angesetzten Anschlußflanschen (314, 314') belassen, den ein sich zwischen der flanschseitigen Stirnseite der Ringdichtungen (331, 331') und dem jeweiligen Anschlußflansch (314 bzw. 314') erstreckendes Federelement überbrückt, und die Ringdichtungen (331, 331') sowie der ihnen jeweils zugeordnete Anschlußstutzen (311 bzw. 311') im Bereich zwischen Schließkörper (32) und Anschlußflansch (214 bzw. 214') einen Ringraum (333) begrenzen, in den eine Druckmittelleitung (334) mündet.

12. Doppelsitzventil nach Anspruch 11, dadurch gekennzeichnet, daß das Federelement eine in die flanschseitige Stirnseite der formbeständigen Ringdichtung (331) eingelassene Weichdichtung (332) ist.

13. Doppelsitzventil nach Anspruch 11 oder Anspruch 12, gekennzeichnet durch einen durch Weichdichtungen (326, 327) abgedichteten Ringraum (333).

14. Doppelsitzventil nach einem der Ansprüche 1 bis 13, gekennzeichnet durch der Wölbung des Schließkörpers (z.B. 32) angepaßte Dichtflächen (z.B. 338) der Ringdichtungen (z.B. 331).

## Claims

1. Shut-off device insertable between two pipes, with leakage display, in the form of a valve designed as a ball valve, the closure member (12) of which forms an effective seal with annular seals (13, 13') disposed in the direction of flow of the medium on both sides at the pipe unions (111, 111') of the valve casing (11), there being formed between the valve casing (11), the annular seals (13, 13') and the spherical closure member (12) a clearance volume (112) sealed in the end positions of the closure member (12) from the media present in the pipes, and from which there originates a leakage pipe (17) passing out of the shut-off device, characterised in that the closure member (12) is mounted at both ends in line with the actuating spindle (16), and in that the annular seals (13, 13') are inserted in the respective pipe unions (111, 111') of the valve casing (11) so as to be positionally fixed in their radial direction, and abut against connector flanges (14, 124') applied to the casing (11).

2. Double-seat valve according to claim 1, characterised by a leakage pipe (19) leading through the wall of the valve casing (11') into the open air.

3. Double-seat valve according to claim 1, characterised in that the bearing journal (17) emerging from the closure member (12) on the side opposite from the actuating spindle (16) is a hollow shaft extending through the casing wall and communicating with the clearance volume (112) of the ball valve.

4. Double-seat valve according to claim 3, characterised by a liquid-tight bearing, which corresponds to the spindle bearing on the valve casing (11), for the hollow shaft on the valve casing (11).

5. Double-seat valve according to one of claims 1 to 4, characterised by a flushing agent feedpipe leading to the clearance volume (112) of the ball valve.

6. Double-seat valve according to claim 5, characterised by a flushing agent feedpipe (263') opening through the wall of the casing (21') directly into the clearance volume (212).

7. Double-seat valve according to claim 6, characterised by a flushing agent feedpipe (263') opening in the highest-situated area tangentially into the clearance volume (212), and by a leakage pipe (29) leading therefrom in the lowest-situated area.

8. Double-seat valve according to claim 5, characterised in that the spindle (26) also is in the form of a hollow shaft closed at the free end, with passages (262) leading to the clearance volume (212) of the ball valve, a flushing agent feedpipe (263) being connected to said spindle (26) in the projection above the ball valve.

9. Double-seat valve according to claim 8, characterised in that the flushing agent feedpipe (263) passes into a ring channel (264) through which the spindle (26) penetrates in a liquid-tight manner, and the spindle wall located in the region of the ring channel (264) is provided with passages (266).

10. Double-seat valve according to claim 8 or claim 9, characterised in that the free cross-section of the passages (266) of the spindle (26) to the clearance volume (212) of the ball valve is smaller than that of the passages (271) from the clearance volume (212) to the hollow shaft.

11. Double-seat valve according to one of claims 1 to 10, characterised in that the annular seals (331, 331'), comprising a dimensionally-stable plastics material and mounted to be displaceable in the axial direction in the pipe unions (311, 311') of the valve casing (31), are of such a length that an axial slot (S) is left between them and the connector flanges (314, 314') applied to the pipe unions (311, 311'), said slot (S) being bridged over by a spring member extending between the end face on the flange side of the ring seals (331, 331') and the respective connector flange (314 or 314'), and the ring seals (331, 331') and their respectively associated pipe unions (311 or 311') define, in the area between closure member (32) and connector flange (214 or 214'), an annular space (333) into which a pressure-medium pipe (334) opens.

12. Double-seat valve according to claim 11, characterised in that the spring member is a soft seal (332) let into the end face on the flange side of the dimensionally-stable ring seal (331).

13. Double-seat valve according to claim 11 or claim 12, characterised by an annular space (333) sealed by soft seals (326, 327).

14. Double-seat valve according to one of claims 1 to 13, characterised by seal surfaces (e.g. 338) of the ring seals (331) adapted to the convexity of the closure member (e.g. 32).

## Revendications

1. Organe d'arrêt à intercaler entre deux canalisations, muni d'un système indicateur de fuite sous forme d'une vanne conformée en robinet à boisseau sphérique dont le corps de fermeture (12) peut être efficacement étanche grâce à des joints toriques d'étanchéité (13, 13') disposés des deux côtés dans le sens de l'écoulement sur les raccords (111, 111') du boîtier de robinet (11), où entre le carter du robinet (11), les joints toriques (13, 13') et le corps de fermeture sphérique (12), est formé un espace mort (112) rendu étanche vis à vis des fluides se trouvant dans les canalisations, dans les positions extrêmes du corps de fermeture (12), duquel sort une conduite de fluide (17) venant de l'organe d'arrêt,
caractérisé en ce que le corps de fermeture (12) est monté en alignement avec la broche d'actionnement (16) des deux côtés dans le boîtier du robinet (11), et en ce que les joints toriques d'étanchéité (13, 13') sont insérés et fixés en position dans leur direction radiale dans chacun des raccords (111, 111') du boîtier de robinet (11) et sont disposés contre des brides de raccordement (14, 14') disposés sur le boîtier (11).

2. Soupape à double siège selon la revendication 1, caractérisée par une conduite de fluide conduisant à l'air libre à travers la paroi du boîtier du robinet (11').

3. Soupape à double siège selon la revendication 1, caractérisée en ce que le tourillon (17) sortant du corps de fermeture (12) du côté opposé à la tige d'actionnement (16) est un arbre creux s'étendant de part en part à travers la paroi du boîtier vers l'espace mort (112) du robinet à boisseau sphérique.

4. Soupape à double siège selon la revendication 3, caractérisée par une position étanche aux liquides de l'arbre creux sur le boîtier de robinet (11) correspondant à la position de la broche sur le boîtier de robinet (11).

5. Soupape à double siège selon l'une des revendications 1 à 4,
caractérisée par une conduite de produit de nettoyage vers l'espace mort (212) du robinet à boisseau sphérique.

6. Soupape à double siège selon la revendication 5, caractérisée par une conduite de produit de nettoyage débouchant directement à travers la paroi du boîtier (21') dans l'espace mort (212).

7. Soupape à double siège sel on la revendication 6, caractérisée par une conduite de produit de nettoyage (263') débouchant tangentiellement dans la partie la plus haute dans l'espace mort (212) et une conduite de fluide (29) sortant de ce dernier à la partie la plus basse.

8. Soupape à double siège selon la revendication 5, caractérisée en ce qu'également, la broche (26) est sous la forme d'un arbre creux fermé à l'extrémité libre avec des passages (262) vers l'espace mort (212) du robinet à boisseau sphérique et qu'une conduite de fluide de nettoyage (263) est reliée à la broche (26) à la partie en porte à faux sur le robinet à boisseau sphérique.

9. Soupape à double siège sel on la revendication 8, caractérisée en ce que la conduite de fluide de nettoyage (263) sort dans un canal annulaire (264) traversant de façon étanche au liquide depuis la broche (26) et que la paroi de la broche se trouvant dans la zone du canal annulaire (264) est munie de passages (266).

10. Soupape à double siège sel on la revendication 8 ou la revendication 9, caractérisée en ce que la section libre des passages (266) de la broche (26) vers l'espace mort (212) du robinet à boisseau sphérique est plus petite que celle des passages (271) allant de l'espace mort (212) vers l'arbre creux.

11. Soupape à double siège selon l'une des revendications 1 à 10,
caractérisée en ce que les joints toriques d'étanchéité (331, 331') montés mobiles dans la direction axiale dans les raccords de liaison (311, 311') et constitués d'une matière synthétique résistante à la déformation, présentent une longueur qui laisse un intervalle entre eux et les brides de raccordement (314, 314') agencés sur les raccords (311, 311'), intervalle qui est ponté par un élément de ressort s'étendant entre le côté frontal, situé du côté des brides de raccordement (314 ou 314'), des joints toriques d'étanchéité (331, 331') et la bride de liaison correspondante (314,314') et en ce que dans la zone entre le corps de fermeture (32) et une bride de liaison (214 ou 214'), les joints toriques (331, 331') ainsi que le raccord (311, 311') qui leur correspond, limitent un espace annulaire dans lequel débouche une conduite de fluide de pression (334).

12. Soupape à double siège selon la revendication 11,
caractérisée en ce que l'élément de ressort est un joint souple introduit dans le joint annulaire résistant à la déformation (331) sur le côté frontal situé du côté de la bride.

13. Soupape à double siège selon la revendication 11 ou la revendication 12,
caractérisée par un espace annulaire (333) rendu étanche par des joints souples (326, 327).

14. Soupape à double siège selon l'une des revendications 1 à 13,
caractérisée par les surfaces d'étanchéité (par exemple 338) des joints toriques d'étanchéité (331) adaptées à la courbure du corps de fermeture (par exemple 32).
